# EUROPÄISCHE PATENTANMELDUNG

(11) **EP 1 844 837 A1**
(43) Veröffentlichungstag der Anmeldung: **17.10.2007**
(21) Anmeldenummer: 07104466.3
(22) Anmeldetag: 20.03.2007
(51) Int. Cl.: B01D 46/24, B01D 50/00

(54) **Mehrstufige Vorrichtung zum Abscheiden von Flüssigkeitstropfen aus Gasen**

(30) Priorität: 12.04.2006 DE 202006006085 U
(71) Anmelder: MANN+HUMMEL GmbH, 71638 Ludwigsburg (DE)
(72) Erfinder: Heikamp, Wolfgang, 67615, Waldsee (DE); Becker, Stefan, 67346, Speyer (DE); Schippers, Carsten, 67354, Römerberg (DE); Neumann, Tobias, 76773, Kuhardt (DE); Gutekunst, Jens, 75053 Gondelsheim (DE)

(57) **Zusammenfassung**

Luftentölelement, bei dem eine Drainageleitung beim Einbau des Luftentölelements in einen Behälter, z.B. einen Druckbehälter, an einen Auslass im Inneren des Behälters ankoppelt.

## Beschreibung

### Technisches Gebiet

Die Erfindung betrifft eine Vorrichtung zum Abscheiden von Flüssigkeitstropfen aus Gasen, insbesondere ein Luftentölelement. Abscheider für Flüssigkeitstropfen aus Gasen werden z.B. zur Abscheidung von Wasser und/oder Öl aus Luft eingesetzt. Insbesondere werden derartige Abscheider zur Entölung der Luft bei Kompressoren verwendet.

### Stand der Technik

Ein Gasstrom, der mit Flüssigkeiten in Kontakt kommt, kann mit Flüssigkeitstropfen angereichert werden. Flüssigkeitstropfen können mechanisch, z.B. beim Durchströmen des Gases durch die Flüssigkeit oder bei einer Führung des Gasstroms über einer Flüssigkeit mitgerissen werden. Bei Schraubenkompressoren z.B. kommt Luft mit Öl in Kontakt. Das Öl wird dabei zur Abdichtung, Kühlung und Schmierung des Kompressors verwendet. Flüssigkeitstropfen können in einem Gasstrom auch durch Kondensation entstehen, z.B. entstehen durch Kondensation Flüssigkeitstropfen in einem Dampfstrom. Bei der Herstellung von Druckluft können Temperaturen von etwa 200 °C entstehen. Durch die Temperaturen kann ein Teil des Öls, das z.B. bei einem Schraubenkompressor zugeführt wird, verdampfen. Bei einer anschließenden Abkühlung kondensiert der Öldampf zu Tröpfchen und Nebel. Die Öltröpfchen eines Schraubenkompressors haben dabei einen Durchmesser in der Größenordnung von etwa 0,01 µm bis 100 µm.

Tropfenabscheider dienen zur Abscheidung von Flüssigkeitstropfen aus Gasen. Tropfenabscheider können eine flüssige von einer gasförmigen Phase trennen. Tropfenabscheider können zur Reinigung von Abluftströmen eingesetzt werden. Mit Tropfenabscheidern können mitgeführte Flüssigkeitstropfen aus Prozessgasströmen abgeschieden werden. Durch die Abscheidung kann die Korrosion oder Erosion von Anlagenteilen oder auch das Anbacken oder Ablagerungen an Anlagenteilen reduziert werden. Durch Wiederverwendung abgeschiedener Medien kann der Verbrauch von Betriebsmedien reduziert werden. Tropfenabscheider werden z.B. zum Entölen von Druckluft eingesetzt.

Tropfenabscheider können als Trägheitsabscheider ausgebildet sein. Bei Trägheitsabscheidern wird die Massenträgheit der Tropfen ausgenutzt, um die Tropfen an Wandungen abzuscheiden. Trägheitsabscheider sind besonders für größere Tropfen geeignet, meist oberhalb von etwa 20 µm Tropfendurchmesser. Eine einfache Form eines Tropfenabscheiders ist eine Prallplatte. Bei einer Prallplatte wird ein mit Flüssigkeitstropfen beladener Gasstrom so gegen eine Platte geführt, dass der Gasstrom die Richtung ändert. Durch die Massenträgheit behalten in dem Gasstrom enthaltene Tropfen ihre Richtung bei, treffen auf die Platte auf und werden von dort abgeleitet. Eine andere Art der Trägheitsabscheidung macht sich Zentrifugalkräfte zu Nutze. Bei Zentrifugalabscheidern wird der Gasstrom auf einer gekrümmten Bahn geführt. Durch die Zentrifugalkräfte werden die Tropfen auf einer äußeren Bahn, mit möglichst großem Krümmungsradius, geführt. Dadurch werden die Tropfen in diesem äußeren Bereich konzentriert. Die Tropfen können dann z.B. an einer Wandung entlang des äußeren Bereichs des Gasstroms abgeschieden werden. Von der Wandung können die Tropfen abgeleitet werden. Alternativ kann auch nur Gas aus dem inneren Bereich des Gasstroms mit niedriger Tropfenkonzentration entnommen werden. Als Zentrifugalabscheider können z.B. verschiedene Arten von Zyklonen eingesetzt werden.

Tropfenabscheider können als Drainageelement ausgebildet sein. Bei einem Drainageelement wird ein mit Flüssigkeitstropfen beladener Gasstrom durch eine netzartige und/oder poröse Drainagestruktur geleitet. Als Drainagestruktur kann z.B. ein Drahtgestrick oder ein Vlies, z.B. aus Kunststoff oder Glasfaser, dienen. Tropfen durchlaufen die Drainagestruktur langsamer als der Gasstrom. Durch die Schwerkraft bewegen sich die Tropfen zum geodätisch unteren Bereich der Drainagestruktur, sammeln sich und können abgeleitet werden.

Die Trägheitsabscheidung ist umso effizienter, je größer die vom Gasstrom mitgeführten Tropfen sind. Zur Tropfenvergrößerung dienen Koaleszierelemente. In Koaleszierelementen wird der Gasstrom durch eine netzartige und/oder poröse Koaleszierstruktur geleitet. Als Koaleszierstruktur kann z.B. ein Drahtgestrick oder ein Vlies, z.B. aus Kunststoff oder Glasfaser, dienen. Der Gasstrom folgt den Stromlinien. Die Tropfen können den Stromlinien nicht folgen und bleiben an Begrenzungsflächen der Koaleszierstruktur haften. Auf der Koaleszierstruktur bildet sich ein Flüssigkeitsfilm aus. Kleine Tropfen vereinigen sich zu größeren Tropfen, d.h. sie koaleszieren. Die vergrößerten Tropfen verlassen die Koaleszierstruktur. Koaleszierelemente können auch einen Drainageeffekt zeigen. Dabei bilden die Tropfen den Flüssigkeitsfilm auf der Koaleszierstruktur, bewegen sich zum geodätisch unteren Bereich und können von dort abgeleitet werden. Daher kann ein kombiniertes Koaleszier- und Drainageelement ausgebildet sein. Die größeren und damit schwereren Tropfen, die die Koaleszierstruktur verlassen, fallen im Gasstrom und können auch dadurch aus dem Gasstrom entfernt werden.

Je nach Einsatzgebiet sind dem Fachmann unterschiedliche Kombinationen von Drainage- und Koaleszierelementen sowie von Trägheitsabscheidern zur Abscheidung von Flüssigkeiten aus Gasen bekannt. Bei der Entölung von Druckluft aus Kompressoren ist das nachfolgend beschriebene System bekannt. In einem Druckbehälter ist am oberen Ende ein zylinderförmiges Strömungsleitblech eingebracht. Der vom Strömungsleitblech gebildete Zylinder ist nach unten zum Druckbehälterinneren hin offen. Zwischen das Strömungsleitblech und die Druckbehälterwand strömt die Druckluft tangential ein, wodurch eine Vorabscheidung von Öl an der Wandung des Druckbehälters erreicht wird, das abgeschiedene Öl wird in den Kompressor zurückgefördert. Die Druckluft strömt von unten in das Luftentölelement, welches sich innerhalb des vom Strömungsleitblech gebildeten Zylinders befindet. Das Luftentölelement umfasst eine oder mehrere Koaleszier- und/oder Drainagestufen, z.B. eine Koaleszierstruktur aus Borsilikat-Glasfasern und eine Drainagestruktur aus Polyestervlies. Das Vlies aus Borsilikat-Glasfasern und das Polyestervlies sind jeweils auf Stützkörper aus Metall aufgezogen. Das Luftentölelement wird von außen nach innen durchströmt. Kleine Flüssigkeitstropfen werden in der Koaleszierstruktur zu größeren Tropfen vereinigt und sinken teilweise bereits in der Koaleszierstruktur ab. Größere Tropfen, die die Koaleszierstruktur verlassen, sinken weiter in der Drainagestruktur ab und sammeln sich am Boden des Luftentölelements. Das Öl am Boden des Luftentölelements wird über eine Drainageleitung zurück zum Verdichterelement gefördert. Die entölte Druckluft wird vom Druckbehälter in einen Druckspeicherbehälter befördert. Das Luftentölelement ist im Druckbehälter an einem oberen Deckel des Druckbehälters montiert. Die Drainageleitung wird durch den oberen Deckel durchgeführt oder an dem oberen Deckel angeschlossen. Von der Durchführung durch oder dem Anschluss am oberen Deckel wird das abgeschiedene Öl über eine Leitung zum Verdichterelement zurückgeführt.

Nachteilig an dem beschriebenen System zur Luftentölung, wie es z.B. bei Schraubenkompressoren eingesetzt wird, ist, dass Anschlüsse für die Drainageleitung und/oder weitere Leitungen zur Rückleitung des Öls zum Kompressor am oberen Deckel vorhanden sein müssen. Die Leitungen werden beim Wechsel des Luftentölelements in der Regel abmontiert. Es besteht die Gefahr, dass Leitungen und/oder Dichtungen beschädigt werden. Es besteht die Möglichkeit, dass es beim Zusammenbau zu Undichtigkeiten kommt. Der Wechsel des Luftentölelements wird erschwert.

### Offenbarung der Erfindung

Aufgabe der Erfindung ist daher die Vereinfachung der Montage einer Vorrichtung zum Abscheiden von Flüssigkeiten aus Gasen, insbesondere eines Luftentölelements, in einem Behälter, insbesondere einem Druckbehälter z.B. eines Schraubenkompressors.

Eine weitere Aufgabe der Erfindung ist es, eine Vorrichtung zum Abscheiden von Flüssigkeiten aus Gasen bereitzustellen, die eine Montage des oberen Deckels eines Druckbehälters ermöglicht, ohne Verbindungen in einer Ölrücklaufleitung abmontieren zu müssen.

Diese und weitere Aufgaben werden durch eine Vorrichtung zum Abscheiden von Flüssigkeiten aus Gasen, bei der eine Drainageleitung beim Einbau der Vorrichtung in einen Behälter, z.B. einen Druckbehälter, an einen Auslass des Behälters ankoppelt, wobei der Auslass am Behälter angebracht ist. Dadurch, dass der Auslass am Behälter angebracht ist, können Leitungen am Behälter bei einem Wechsel der Vorrichtung verbleiben.

Die Drainageleitung kann am Stützrohr angeschweißt, angespritzt oder mit dem Stützrohr einstückig gefertigt sein. Die Drainageleitung kann auch in eine röhrenförmige Aufnahme des Stützrohrs eingeschoben sein oder am Stützrohr angeklipst sein. Durch die unterschiedlichen Befestigungsmöglichkeiten kann eine optimierte Fertigung der Vorrichtung zur Abscheidung von Flüssigkeiten aus Gasen erreicht werden.

Vorteilhaft umfasst das Luftentölelement Positioniervorrichtungen, welche die Einbaulage des Luftentölelements in einem Druckbehälter festlegen. Bevorzugt sind die Positioniervorrichtungen selbstfindend ausgestaltet.

Vorteilhaft kann die Ankoppelung der Drainageleitung an den Druckbehälter an einer Positioniervorrichtung geschehen.

Die Abdichtung der Drainageleitung kann durch eine axial wirkende Dichtung erzielt werden. Steht die Drainageleitung an der Ankoppelstelle senkrecht zum Druckbehälter, so ist ein Axialdruck auf die Dichtung in radialer Richtung eines typischerweise zylinderförmigen Druckbehälters. Der Druck kann z.B. durch Verspannung des Luftentölelements im Druckbehälter auf der der Ankoppelstelle gegenüberliegenden Seite an einer Positionsmarke verursacht werden.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Kurze Beschreibung der Zeichnungen

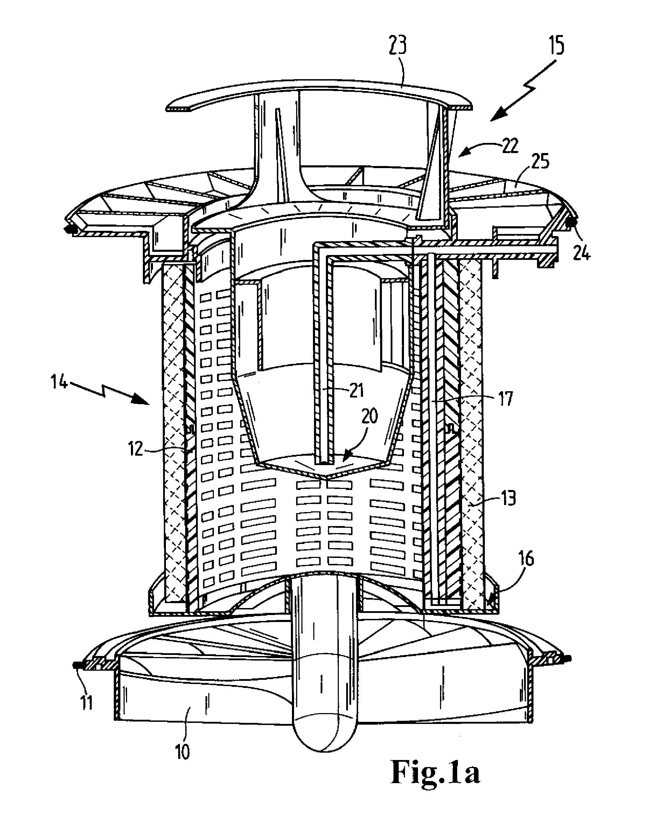

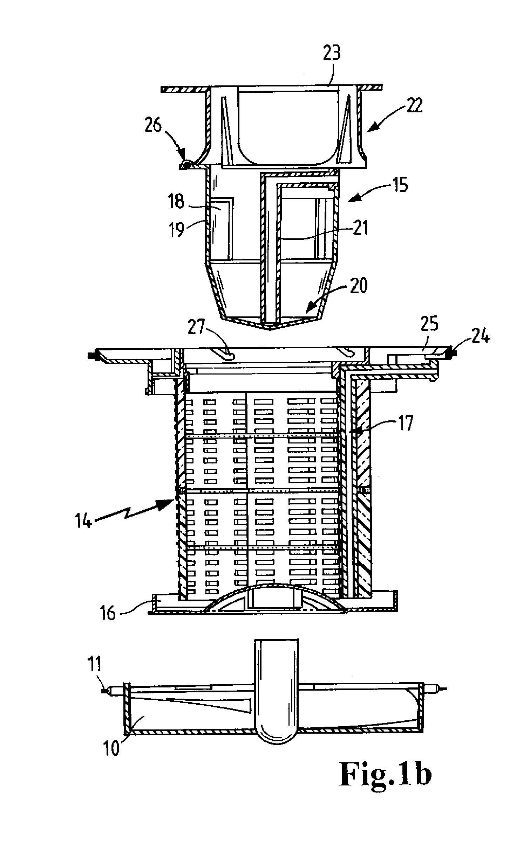

- Fig. 1 a: zeigt eine Vorrichtung zur Abscheidung von Flüssigkeiten aus Gasen, wie sie zur Luftentölung bei einem Luftverdichtungssystem mit Schraubenkompressor eingesetzt werden kann,
- Fig. 1 b: zeigt die Vorrichtung aus Fig. 1 a, wobei die Vorrichtung in mehrere Bestandteile zerlegt ist,
- Fig. 2: zeigt eine alternative Vorrichtung zur Abscheidung von Flüssigkeiten aus Gasen, wie sie zur Luftentölung bei einem Luftverdichtungssystem mit Schraubenkompressor eingesetzt werden kann, mit aus mehreren Stützrohren zusammensetzbarem Hauptabscheider,
- Fig. 3 a, b: zeigen eine weitere bevorzugte Ausführungsform einer Ankopplung eines Drainagerohrs an einem Druckbehälter, und
- Fig. 4: zeigt eine Ausführungsform.

### Ausführungsform(en) der Erfindung

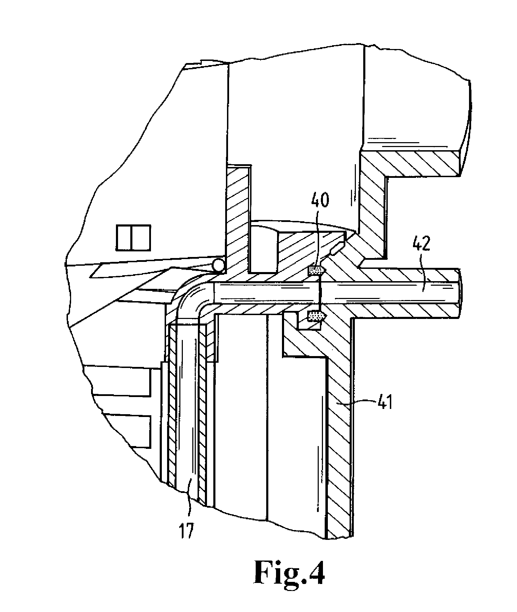

Bei einem Luftverdichtungssystem mit Schraubenkompressor werden bei der Drucklufterzeugung im Schraubenkompressor etwa 5 kg Öl /m³ Luft zugeführt. Das Öl dient sowohl zur Schmierung des Kompressors als auch zur Abdichtung. Bei einem herkömmlichen Luftverdichtungssystem, das zur Bereitstellung so genannter ölfreier Druckluft dient, d.h. das Druckluft mit Ölgehalten von etwa 1 bis 3 mg/m³ Luft bereitstellen soll, muss die ölhaltige Druckluft entölt werden. In einem herkömmlichen Luftverdichtungssystem findet eine Vorabscheidung in einem Druckbehälter statt. Die Vorabscheidung wird durch tangentiales Einströmen der ölhaltigen Luft in den Druckbehälter erreicht. Die Luft strömt dabei um einen zylinderförmigen Einsatz im Druckbehälter herum, in dem ein Luftentölelement zur weiteren Abscheidung des Öls eingebracht ist. Durch den tangentialen Eintritt und das Abscheiden von Öl an der Druckbehälterwand als Prallplatte kann im Druckbehälter eine Reduktion der Ölkonzentration in der Druckluft, die am Luftentölelement ankommt, auf etwa 2 bis 5 g/m³ Luft erreicht werden. Das abgeschiedene Öl wird dem Kompressor wieder zugeführt. In der in den Figuren 1 a und b dargestellten Ausführungsformen der Erfindung kann die ölhaltige Luft nun beliebig in den Druckbehälter einströmen. Die ölhaltige Luft durchströmt im Druckbehälter von unten den Leitapparat 10 eines Inlinezyklons, der als Vorabscheider dient. Der Leitapparat 10 dichtet mit der Dichtung 11, die einen Spalt offen lässt oder Öffnungen umfasst, gegen die Druckbehälterwand und trennt so den Druckbehälter in einen Rohluftbereich und einen Vorabscheiderbereich auf, wobei Öl an der Druckbehälterwandung vom Vorabscheiderbereich in den Rohluftbereich zurückfließen kann. Alternativ kann das Öl auch durch den Leitapparat 10 zurückfließen. Durch einen derart ausgeführten Vorabscheider kann die Ölkonzentration auf unter 0,5 g/m³ Luft reduziert werden. Durch die im Vergleich mit herkömmlichen Systemen zur Luftentölung niedrigere Ölkonzentration ergeben sich Freiheiten für die Konstruktion des Hauptabscheiders 14 und/oder des Nachabscheiders 15, da diese geringere Abscheideraten erreichen müssen. Die Luft durchströmt vom Vorabscheidebereich einen Hauptabscheider, der in der Ausführungsform von Fig. 1 a als ein auf ein Stützrohr 12 aufgebrachtes Vlies 13 aus Borsilikat-Glasfaser als Koaleszierstruktur ausgeführt ist. Beim Durchströmen des Vlieses 13 verbinden sich kleinere Tropfen zu größeren Tropfen, gleichzeitig sinken die Tropfen in der Koaleszierstruktur ab. Die absinkenden Tropfen sammeln sich in einer ersten Mulde 16 zusammen mit großen Tropfen, die aus der Koaleszierstruktur herausdringen und im Inneren des Stützrohrs 12 im Gasstrom geodätisch nach unten fallen. Durch eine erste Drainageleitung 17 wird das abgeschiedene Öl aus der Mulde 16 zurückgeführt. Die erste Drainageleitung 17 ist in Fig. 1 a und b am Stützrohr 12 angeschweißt. Der Luftstrom, der aus dem Hauptabscheider 14 zum Nachabscheider 15 strömt, enthält nun im Wesentlichen größere Öltropfen, die im Nachabscheider 15 abgeschieden werden können. In der Ausführungsform in Fig. 1 a und b dient ein Umkehrzyklon 18 zur Nachabscheidung. Im Umkehrzyklon wird die Luft in Rotation versetzt, so dass die Öltropfen an der Wandung 19 des Umkehrzyklons 18 abgeschieden werden. Die Öltropfen gleiten an der Wandung 19 des Umkehrzyklons 18 in die zweite Mulde 20 und werden von der zweiten Mulde 20 über eine zweite Drainageleitung 21 wieder zum Kompressor zurückgeführt. Die zweite Drainageleitung 21 ist in der in Fig. 1 a und b dargestellten Ausführungsform mit der ersten Drainageleitung 17 gekoppelt, sie könnte jedoch auch separat verlaufen. Der Nachabscheider 15 umfasst einen Abstandshalter 22, an dessen oberen Ende ein Befestigungsring angebracht ist. Die Vorrichtung zur Abscheidung von Flüssigkeiten aus Gasen kann mit diesem Befestigungsring 23 im Druckbehälter befestigt werden. Eine am oberen Ende des Hauptabscheiders 14 angebrachte Trennplatte 25 dichtet mit der Dichtung 24 gegen den Druckbehälter ab. Die Trennplatte 25 trennt den Vorabscheidergasbereich von der entölten Luft, die den Nachabscheider 15 verlässt. Die Drainageleitung 17 ist in ihrem oberen Bereich an eine seitliche Verbindungsstelle geführt. Beim Einbau der Vorrichtung in einen Druckbehälter dichtet ein O-Ring 40 (dargestellt in Fig. 4) die Drainageleitung 17 gegen die Behälterwand 41 ab. In der Behälterwand befindet sich eine Durchbohrung 42, an die eine Ölrücklaufleitung angebracht sein kann.

In Fig. 1 b ist der modulartige Aufbau der Vorrichtung zur Abscheidung von Flüssigkeiten aus Gasen dargestellt. Der als Inlinezyklon 10 ausgeführte Vorabscheider 10, der Hauptabscheider 14 und der Nachabscheider 15 sind als Baugruppen ausgeführt. Die Baugruppen können z.B. mit einer Bajonettverbindung zusammengefügt werden. Zapfen 26 und Aufnahmen 27 für die Zapfen 26 sind für die Koppelung des Nachabscheiders 15 an den Hauptabscheider 14 dargestellt. Andere Steck-, Rast- oder Schraubverbindungen sind natürlich auch denkbar. Ebenso könnten die Baugruppen miteinander verschweißt werden. Die einzelnen Baugruppen der Fig. 1 b können alle aus Kunststoff, insbesondere aus glasfaserverstärktem Polyamid, gefertigt sein. Die erste Drainageleitung 17 kann mittels Vibrations-, Ultraschall- oder Spiegelschweißen am Stützrohr angebracht sein. Benötigte Dichtungen 11 oder weitere Dichtungen können angespritzt werden oder als O-Ring-Dichtung in Nuten eingebracht werden. Durch den modulartigen Aufbau können verschiedene Elemente für eine Baugruppe miteinander ausgetauscht werden. So kann z.B. statt des Umkehrzyklons 18 ein Spiralzyklon oder ein zweiter Inlinezyklon verwendet werden. Unterschiedlich hohe Hauptabscheider mit unterschiedlich großen Flächen der Koaleszierstruktur können eingesetzt werden. Sind die Baugruppen Vorabscheider, Hauptabscheider und Nachabscheider trennbar miteinander verbunden, so kann bei einer Wartung auch nur eine einzelne Baugruppe ausgetauscht werden. Z.B. könnten der Inlinezyklon 10 und der Nachabscheider 15 als Lebensdauerbauelement ausgeführt sein, und nur der Hauptabscheider 14 mit dem Vlies 13 wird ausgewechselt.

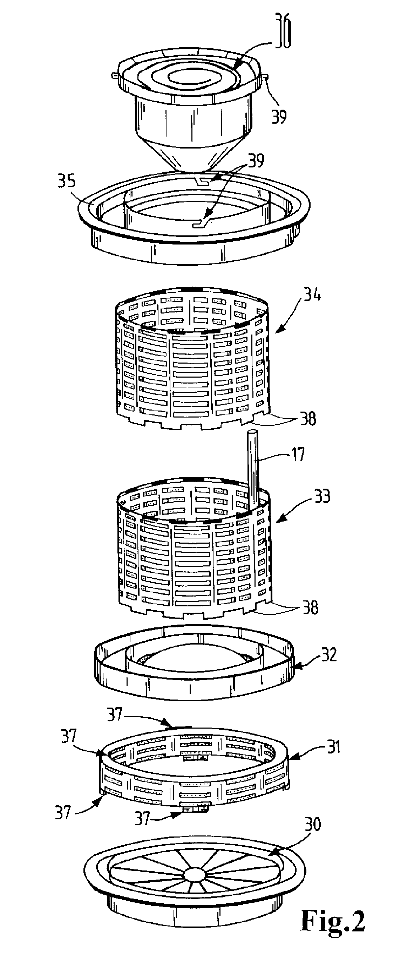

In Fig. 2 ist eine Ausführungsform der Vorrichtung zur Abscheidung von Flüssigkeiten aus Gasen dargestellt, mit aus mehreren Stützrohren zusammensetzbarem Hauptabscheider, zerlegt in ihre Einzelteile. In der Ausführungsform der Fig. 2 dient ein Inlinezyklon 30 als Vorabscheider. Der Inlinezyklon 30 kann über ein Distanzstück 31 mit Rastverbindungen 37 mit einer Ölauffangmulde 32 trennbar verbunden werden. Die Ölauffangmulde 32 kann mit einem ersten Stützrohr 33 durch Steckverbindungen 38 verbunden werden. Ein zweites Stützrohr 34, das gleich aufgebaut ist wie das erste Stützrohr 33, kann auf das erste Stützrohr 33 mit Steckverbindungen 38 gesteckt werden. Weitere zusätzliche nicht dargestellte Stützrohre könnten hinzugefügt werden. In der schematischen Darstellung der Fig. 2 ist das Vlies, welches das Stützrohr umgibt, nicht dargestellt. Wiederum durch eine nicht dargestellte Steckverbindung kann das Abschlussstück 35 auf das zweite Stützrohr 34 gesteckt werden. In das Abschlussstück 35 kann als Nachabscheider ein Spiralzyklon 36 eingesetzt werden. In der Ausführungsform der Fig. 2 wird der Spiralzyklon 36 mit einer Bajonettverbindung 39 am Abschlussstück 35 trennbar montiert. An die zusammengesteckten Stützrohre 33, 34 kann die erste Drainageleitung 17 angeklipst werden.

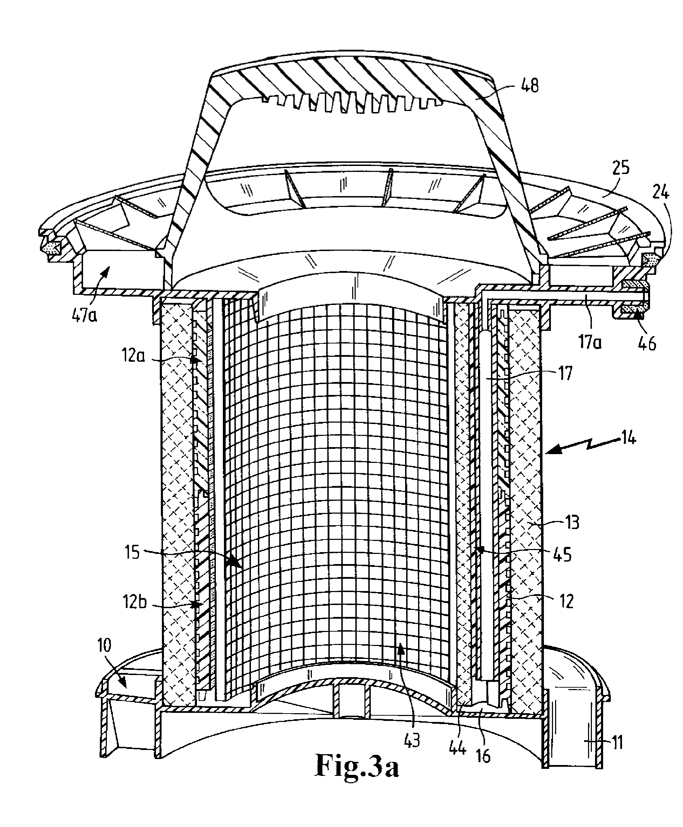

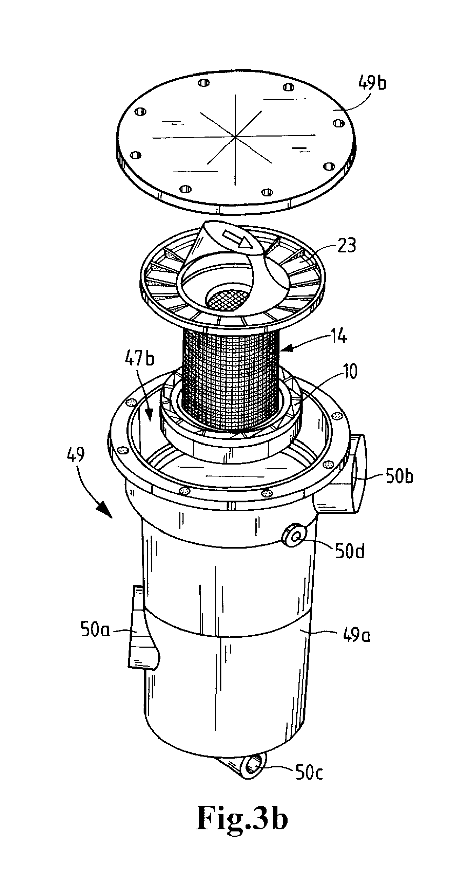

Das Luftentölelement der Fig 3 a ist eine bevorzugte Ausführungsform der Erfindung. Ein Flügelrad 10 aus Kunststoff, z.B. aus glasfaserverstärktem Polyamid, dient als Vorabscheider. Der Hauptabscheider 14 ist wie in Fig. 1 a und b als Koaleszierelement ausgeführt. Ein Vlies 13 ist auf einen ersten Stützkörper 12 aufgewickelt und verklebt. Der erste Stützkörper 12 ist aus zwei Modulen 12 a und 12 b zusammengesetzt, die beiden Module 12 a und 12 b können identisch sein. Der Nachabscheider 15 ist in der Ausführungsform der Fig. 3 a als Drainageelement ausgebildet. Um einen zweiten Stützkörper 43 ist ein Drainagevlies 44, z.B. aus Polyamid oder Glasfaser, gewickelt. In einer Mulde 16 sammelt sich Öl, das vom Hauptabscheider 14 und vom Nachabscheider 15 abgeschieden wird. Am ersten Stützrohr 12 ist eine Aufnahme 45 für eine Drainageleitung 17 angebracht. Die Aufnahme 45 ist als an jedem Modul 12 a und b des Stützkörpers 12 angespritzter Rohrabschnitt ausgeführt. Die Drainageleitung 17 ist in die Aufnahme 45 eingeschoben. Die Drainageleitung 17 ist mit einem Drainageleitungsabschnitt 17 a verbunden. Der Drainageleitungsabschnitt 17 a wird beim Einsetzen des Luftentölelements in den Druckbehälter mit einer Dichtung 46 an einen Druckbehälterausgang angekoppelt. Der erste Stützkörper 12 und der zweite Stützkörper 43 sind am geodätisch oberen Ende mit einer Endscheibe, die als Trennplatte 25 den Druckbehälter aufteilt, verbunden. Die Trennplatte 25 dichtet mit einem Dichtungsring 24 am Druckbehälter ab. An der Trennplatte 25 ist ein Griff 48 angebracht, dieser kann abnehmbar sein oder in einer anderen Ausgestaltung der Erfindung, in eingebautem Zustand des Luftentölelements, im Druckbehälter das Luftentölelement fixieren. Die konisch ausgeformte Positioniermarke 47a lässt sich in ein korrespondierend geformtes Gegenstück am Druckbehälter einschieben. Durch die konische Ausformung der Positioniermarke 47 a ist diese selbstfindend, und das Luftentölelement rutscht bei nicht vollständig richtiger Positionierung beim Einbau automatisch in die richtige Position. Andere Ausgestaltungen, z.B. bei denen sich konvexe und konkave Formen an Druckbehälter und Luftentölelement korrespondierend gegenüberstehen, so dass diese ineinander rutschen können, sind ebenfalls möglich, z.B. Kreisansätze. Die Positioniermarke 47 a kann auch so ausgestaltet werden, dass sie eine Verspannung im Luftentölelement aufbaut, durch die die Dichtung 46 axial verpresst wird.

Fig. 3 b zeigt den Einbau des Luftentölelements aus Fig. 3 a in einen Druckbehälter 49. Der Druckbehälter 49 umfasst einen Deckel 49 b und einen Korpus 49 a. Bevorzugt ist der Druckbehälter aus Stahl gefertigt. Der Druckbehälter 49 umfasst Lufteinlässe 50 a und Luftauslässe 50 b. Der Druckbehälter umfasst an seinem geodätisch unteren Ende einen Ölauslass und einen weiteren Ölauslass 50 d, der an die Drainageleitung 17 koppelt. Eine zu einer Positioniermarke 47 a korrespondierende Aussparung 47 b am Druckbehälter 49 lässt den Einbau des Luftentölelements nur in einer Position zu. Das Luftentölelement kann in den Druckbehälter 49 a eingesetzt werden und der Deckel 49 b kann auf den Korpus 49 a aufgeschraubt werden, ohne dass hierfür Leitungen am Druckbehälter 49 geöffnet werden müssen.

## Patentansprüche

1. Luftentölelement für einen Luftverdichter, insbesondere einen Schraubenkompressor, bei dem eine Drainageleitung beim Einbau des Luftentölelements in einen Behälter, z.B. einen Druckbehälter, an einen Auslass im Inneren des Behälters ankoppelt.

2. Luftentölelement nach einem der vorhergehenden Ansprüche, wobei die Ankopplung zwischen Luftentölelement und Druckbehälter in radialer Richtung erfolgt.

3. Luftentölelement nach einem der vorhergehenden Ansprüche, wobei das Luftentölelement eine oder mehrere erste Positioniervorrichtungen umfasst, die zu einen oder mehreren zweiten Positioniervorrichtungen des Druckbehälters korrespondieren.

4. Luftentölelement nach Anspruch 4, wobei die korrespondierenden Positioniervorrichtungen selbstfindend ausgeführt sind.

5. Luftentölelement nach einem der Ansprüche 5 oder 6, wobei mindestens eine erste Positioniervorrichtungen und mindestens eine korrespondierende zweite Positioniervorrichtung unterschiedlich ausgeführt sind, so dass nur eine Einbaulage des Luftentölelements im Druckbehälter erlaubt ist.

6. Luftentölelement nach einem der Ansprüche 4 bis 6, wobei die Ankoppelung des Luftentölelements an den Druckbehälter an einer ersten Positioniervorrichtung erfolgt.

7. Luftentölelement nach Anspruch 7, wobei eine Verspannungspositioniervorrichtung auf der gegenüberliegenden Seite der Ankopplungspositioniervorrichtung am Luftentölelement angebracht ist, wobei zwischen einer ersten Druckbehälterseite, der Verspannungspositioniervorrichtung, dem Luftentölelement, der Ankoppelpositioniervorrichtung, der Dichtung und einer zweiten Druckbehälterseite beim eingebauten Luftentölelement mechanische Spannung aufgebaut ist, die die Dichtung axial verpresst.

8. Luftentölelement nach einem der vorhergehenden Ansprüche, wobei die Drainageleitung in eingebautem Zustand der Vorrichtung mit einem O-Ring gegen die Behälterwand abdichtet.

9. Luftentölelement nach einem der vorhergehenden Ansprüche in einem Druckbehälter.

10. Luftverdichtungsanlage umfassend ein Luftentölelement nach einem der Ansprüche 1 bis 10.
